# EUROPEAN PATENT APPLICATION

(11) **EP 3 225 089 A1**
(43) Date of publication of application: **04.10.2017**
(21) Application number: 15863209.1
(22) Date of filing: 04.09.2015
(51) Int. Cl.: A01C 1/00, G01N 21/359

(54) **TREE SEED SELECTING METHOD USING NEAR INFRARED LIGHT**

(30) Priority: 28.11.2014 JP 2014242184
(71) Applicant: Sumitomo Forestry Co., Ltd., Tokyo 100-8270 (JP); Kyushu University, National University Corporation, Fukuoka-shi, Fukuoka 812-8581 (JP); Forest Research and Management Organization, Tsukuba-shi Ibaraki 305-8687 (JP)
(72) Inventor: HARA Masashi, Tokyo 100-8270 (JP); MATSUDA Osamu, Fukuoka-shi Fukuoka 812-8581 (JP); UEMURA Akira, Tsukuba-shi Ibaraki 305-8687 (JP); UTSUGI Hajime, Tsukuba-shi Ibaraki 305-8687 (JP); TOBITA Hiroyuki, Tsukuba-shi Ibaraki 305-8687 (JP)
(74) Representative: Kolster Oy Ab
(86) International application number: PCT/JP2015/075168
(87) International publication number: WO 2016/084452

(57) **Abstract**

Provided is a conifer seed selecting method for identifying and selecting only conifer seeds which have a normal embryo, from a mixture, of an identical species, of conifer seeds some having a normal embryo and some not having a normal embryo, the method comprising the steps of:
(a) irradiating the seeds with near infrared light, measuring the spectrum of near infrared light reflected from each seed, and obtaining data of reflectance at each wavelength;
(b) extracting, for each seed, data of reflectances at two specific wavelengths within a range of 750 to 2200 nm;
(c) calculating, for each seed, the ratio between the extracted reflectances; and
(d) comparing the ratio calculated in (c) with a threshold for the ratio of reflectances at the two specific wavelengths for determining whether the seed has a normal embryo, wherein (i) when there is a tendency that the ratio is lower than or equal to the threshold in a seed having a normal embryo, a seed having the ratio lower than or equal to the threshold is identified as a seed having a normal embryo, and (ii) when there is a tendency that the ratio is greater than the threshold in a seed having a normal embryo, a seed having the ratio greater than the threshold is identified as a seed having a normal embryo.

## Description

### Technical Filed

The present invention relates to a selecting method, using near-infrared light, of seeds of conifers, in particular, Cupressaceae plants (Japanese cedar, Japanese cypress) and Pinaceae plants.

In a continuous operation system for low-cost forestation, in which planting is carried out soon after harvesting, production of container seedlings is necessary.

For producing containerized seedlings using seeds, there is a method in which seeds are directly sown in a container and nursed thereafter, and a method in which seeds were sown in a non-container apparatus such as a sowing bed and germinated seedlings are transplanted.

For trees, however, because of high occurrence frequency of shibudane (seeds of which content is resin rather than an embryo) or immature seeds (including shiina, which lack contents), a germination rate is low if seeds are sown without pre-selection, so that efficient production with one-seed sowing to a container is at present impossible. This applies to important forestation trees in Japan, Japanese cedar and Japanese cypress.

The shibudane, one category of sterile seeds, compared with sound seeds, which have normal embryos, the contents further inside from the testa are largely different. Shibudane, however, in terms of specific weight and appearance, do not differ from sound seeds.

Meanwhile, selection with specific weight of seeds is widely used and shiina can thereby be removed. Shibudane, which are characteristic to Japanese cedar/ Japanese cypress, etc., however, because of the aforementioned no difference from sound seeds, cannot be removed by the selection with specific weight.

Under this background, Patent Literature 1 and 2 each discloses, as techniques to select seeds, a technique for seed selection using near-infrared light and technique using spectral data. Patent Literature 3 describes a selecting method employing, as a selection factor, a germination rate of seeds or seedling-maturing rate.

In addition, Non-Patent Literature 1 describes selecting grain seeds with near-infrared hyperspectral imaging and chemometrics.

### Prior Art Literature

### Patent document

[Patent Literature 1] JP10-257803
[Patent Literature 2] US Patent 2004/0055211
[Patent Literature 3] WO 2013/133171 Pamphlet

### [Non-Patent Literature]

[Non-Patent Literature 1] McGoverin, C.M. et al. Characterisation of non-viable whole barley, wheat and sorghum grains using near-infrared hyperspectral data and chemometrics, Anal Bioanal Chem. 2011, 401(7):2283-9.

### Summary of Invention

### Technical Problem

In the techniques disclosed in Patent Literature 1 and 2 as well as Non-Patent Literature 1, however, principal component analysis associated with complicated calculation must be conducted. In addition, in the methods described in Patent Literature 1 and Non-Patent Literature 1, subjects applicable are each limited only to rape seeds and grain seeds.

In the technique described in Patent Literature 2, pre-treatment with water needs to be conducted, so that the operation is cumbersome; the method described in Patent Literature 3 is not a method for discriminating sound seeds against sterile seeds.

Under the above-mentioned background, the present invention aimed to provide a method to determine, with a non-destructive operation, whether a seed of a conifer is sound seed, and thereby selecting sound seeds from a mixed group of seeds in which sound seeds and sterile seeds are mixed.

### Means to Solve the Problem

In view of the above mentioned problem, focusing on possibility of selecting and removing sterile seeds by non-destructively sensing the embryonic component of a seed based on spectral characteristics in the near-infrared wavelength region, the present inventors intensively researched to find out that, with a certain parameter, sound seeds, which have a normally-grown emryo, could be detected with high accuracy, and completed the present invention with further research.

The present invention relates at least to the following inventions:
[1] A conifer seed selecting method, comprising the following steps, of for identifying and selecting just conifer seeds which have a normal embryo, from a mixture, of an identical species, of conifer seeds some having a normal embryo and some not having a normal embryo:
   (a) irradiating the seeds with near infrared light, measuring the spectrum of near infrared light reflected from each seed, and obtaining data of reflectance at each wavelength;
   (b) extracting, for each seed, data of reflectances at two specific wavelengths within a range of 750 to 2200 nm;
   (c) calculating, for each seed, the ratio between the extracted reflectances; and
   (d) comparing the ratio calculated in (c) with a threshold for the ratio of reflectances at the two specific wavelengths for determining whether the seed has a normal embryo, wherein (i) when there is a tendency that the ratio is lower than or equal to the threshold in a seed having a normal embryo, a seed having the ratio lower than or equal to the threshold is identified as a seed having a normal embryo, and (ii) when there is a tendency that the ratio is greater than the threshold in a seed having a normal embryo, a seed having the ratio greater than the threshold is identified as a seed having a normal embryo.
[2] The method according to [1] above, wherein the conifer is a Cupressaceae plant or Pinaceae plant.
[3] The method according to [2] above, wherein the conifer is a Cupressaceae plant and the Cupressaceae plant is the Japanese cedar or Japanese cypress.
[4] The method according to [2] above, wherein the conifer is a Pinaceae plant and the Pinaceae plant is the pines, larches, firs or spruces.
[5] The method according to any one of [1] to [4] above, wherein at least one of the two specific wavelengths are selected from a range between about 1720 nm and about 1760 nm.
[6] The method according to [5] above, wherein the two specific wave length each is selected from a range between about 1760 nm and about 1840 nm and about 1840 nm and about 1870 nm.
[7] The method according to [5] above, wherein the two specific wave length each is selected from a range between about 1760 nm and about 1840 nm and about 1620 nm and about 1650 nm.
[8] The method according to [6] above, wherein the two specific wave length each is about 1734 nm and about 1854 nm.
[9] The method according to [6] above, wherein the two specific wave length each is about 1734 nm and about 1637 nm.
[10] The method according to any one of [1] to [4] above, wherein the two specific wave lengths are selected from a range between about 1620 nm and about 1760 nm.
[11] The method according to any one of [1] to [4] above, wherein the two specific wave lengths are selected from a range between about 1720 nm and about 1870 nm.
[12] The method according to [1] above, wherein said method further comprises a step of analyzing data of a reflectance at a wavelength different from the two specific wavelengths.
[13] The method according to [12] above, wherein the two specific wavelengths and the wavelength different from the two specific wavelengths are each wavelength in a range of about 1580 nm to about 1650 nm, about 1700 nm to about 1790 nm and about 1800 nm to about 2100 nm.
[14] The method according to [13] above, wherein the conifer is a Cupressaceae plant or Pinaceae plant, and the two specific wavelengths and the wavelength different from the two specific wavelengths are each wavelength in a range of about 1600 nm to about 1650 nm, about 1700 nm to about 1790 nm and about 1950 nm to about 2100 nm.
[15] The method according to [14] above, wherein the two specific wavelengths and the wavelength different from the two specific wavelengths are each 1622, 1772 nm and 1981 nm, or 1645 nm, 1727 nm and 1997 nm.
[16] The method according to claim 9, wherein the conifer is a larch plant, and the two specific wavelengths and the wavelength different from the two specific wavelengths are each wavelength in a range of about 1580 nm to about 1620 nm, about 1700 nm to about 1750 nm and about 1850 nm to about 1910 nm.
[17] The method according to [16] above, wherein the two specific wavelengths and the wavelength different from the two specific wavelengths are each 1600 nm, 1734 nm and 1891 nm.
[18] A method for deciding whether a specific conifer seed has a normal embryo comprising the following steps:
   (a) irradiating the seeds with near infrared light, measuring the spectrum of near infrared light reflected from each seed, and obtaining data of reflectance at each wavelength;
   (b) extracting, for each seed, data of reflectances at two specific wavelengths within a range of 750 to 2200 nm;
   (c) calculating, for each seed, the ratio between the extracted reflectances; and
   (d) comparing the ratio calculated in (c) with a threshold for the ratio of reflectances at the two specific wavelengths for determining whether the seed has a normally-grown embryo, wherein (i) when there is a tendency that the ratio is lower than or equal to the threshold in a seed having a normal embryo, a seed having the ratio lower than or equal to the threshold is identified as a seed having a normal embryo, and (ii) when there is a tendency that the ratio is greater than the
   threshold in a seed having a normal embryo, a seed having the ratio greater than the threshold is identified as a seed having a normal embryo.

### Effect of the Invention

The present inventive method, by using a ratio of reflectances at two wavelengths, enables selection of seeds, i.e. extraction of sound seeds, of coniferous plants such as Cupressaceae plants including Japanese cedar and Japanese cypress as well as Pinaceae plants.

The present inventive method can be conducted using just two wavelengths, so that, as a camera for near infrared light, which is an apparatus to be used in the method, low-cost one is available; in addition, in analyzing the obtained reflectance data, complicated calculation is not necessary, which renders the method simple.

By using the present inventive method, discriminating sound seeds from a group of seeds in which sound seeds and sterile seeds are mixed is possible, and improving a germination rate of coniferous plant seeds can thus be possible. The improved germination rate achieves, even in one-seed sowing in a container, reduction of the number of wasted containers occupying nursery space with no germination. The present invention hence omits, unlike the conventional container seedlings, labor of thinning out after sowing plural seeds, or transplanting from germination beds, and is expected to contribute for low-cost production with containers.

### Simple Explanation of Drawings

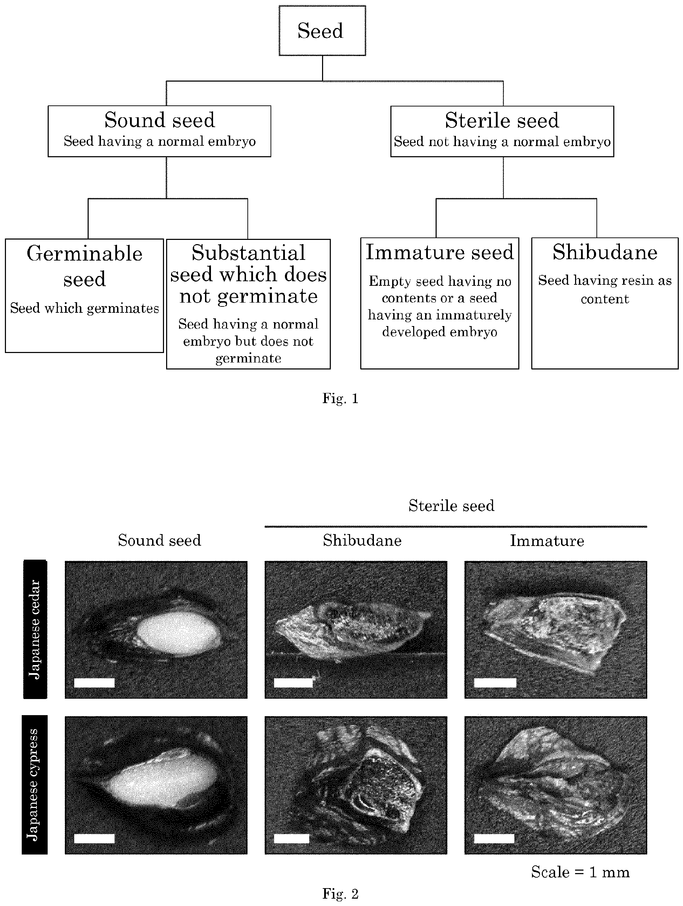

[Fig. 1] A figure showing categories of seeds.
[Fig. 2] Photographic figures showing a cross section of a sound seed and sterile seed (a shibudane and immature seed).

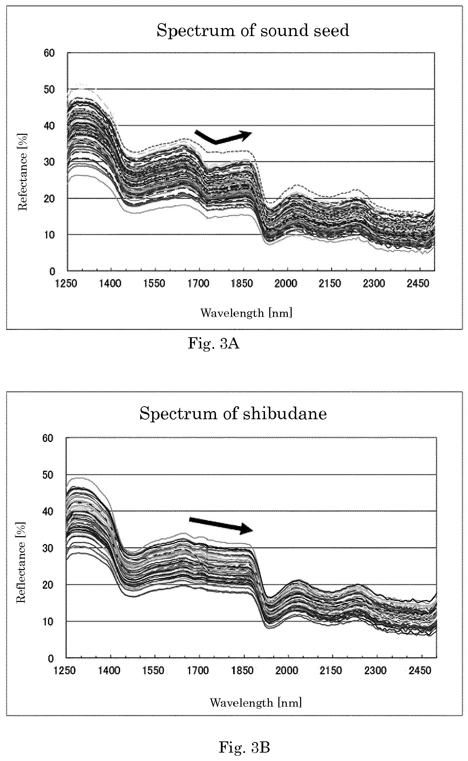

[Fig. 3A] A graph showing an example of reflection spectral data of a sound seed of Japanese cedar. The arrow indicates a characteristic shape pattern (downwardly convex).
[Fig. 3B] A graph showing an example of reflection spectral data of a shibudane of Japanese cedar. The arrow indicates a characteristic shape pattern (a flat shape).

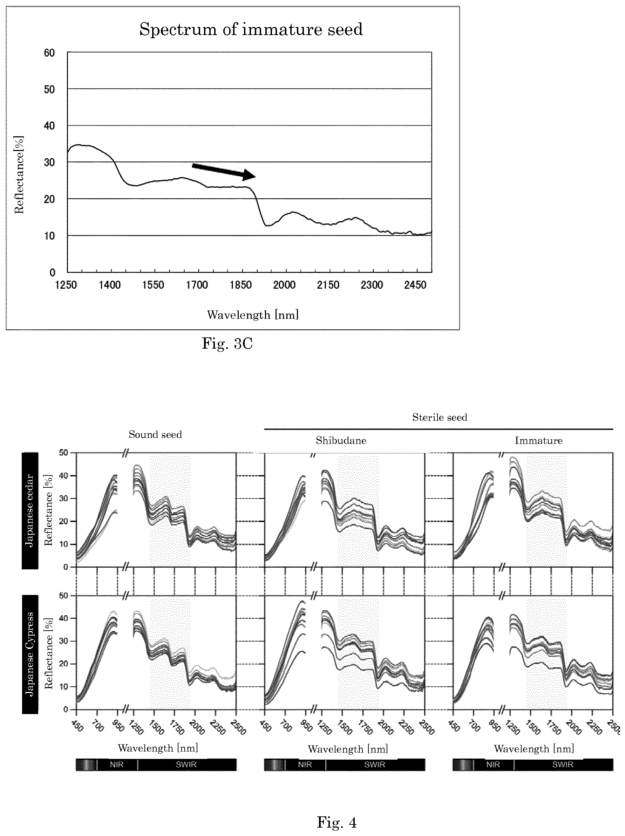

[Fig. 3C] A graph showing an example of reflection spectral data of an immature seed of Japanese cedar. The arrow indicates a characteristic shape pattern (a flat shape).
[Fig. 4] A figure more clearly showing the difference of reflectance spectral patterns (M character shape and π character shape) between sound seeds and sterile seeds (shibudane and immature seeds). The upper and lower rows each show, regarding the Japanese cedar (Shimane-originated) and Japanese cypress (Ibaraki origin), sound seeds, shibudane and immature seeds from the left.

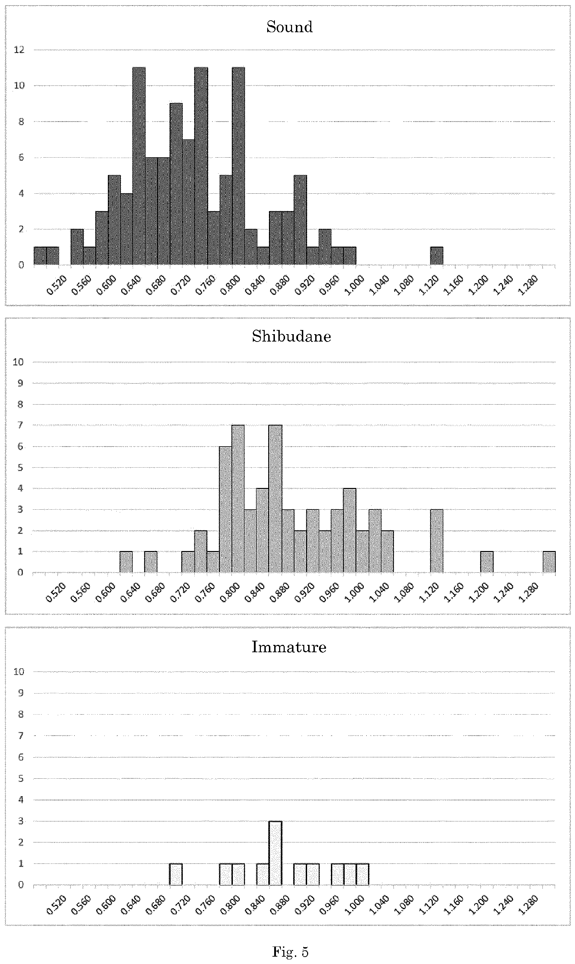

[Fig. 5] A figure showing, on the Japanese cedar (Shikoku-originated), under selecting at wavelengths of 750 nm and 1734 nm, the occurrence frequency pattern of the relative reflectance ratio values in sound seeds and sterile seeds (shibudane and immature seeds); the figure shows the frequency of the relative reflectance ratio evidently varies at about 0.76.

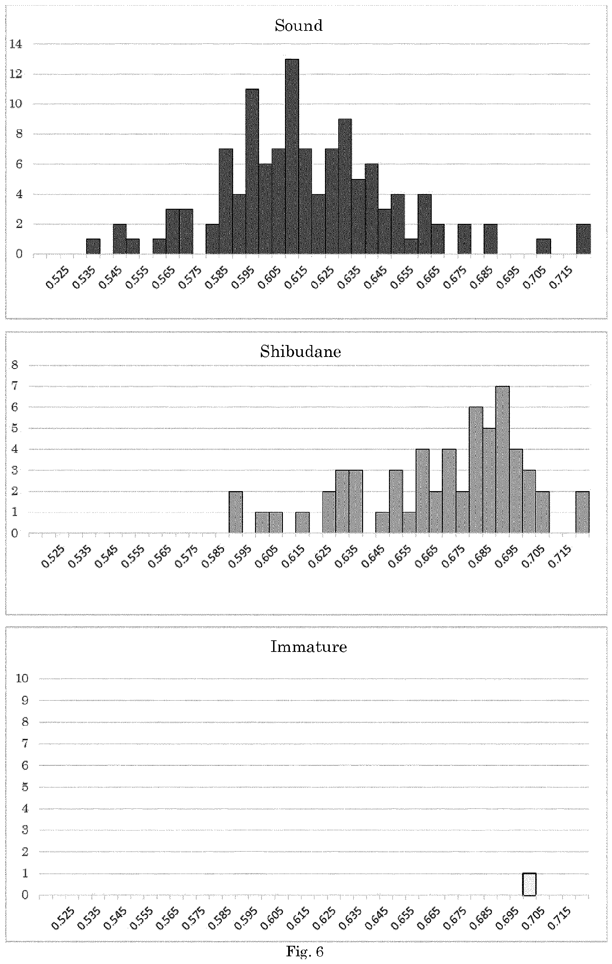

[Fig. 6] A figure showing, on the Japanese cedar (Ibaraki-originated), under selecting at wavelengths of 1250 nm and 1734 nm, the occurrence frequency pattern of the relative reflectance ratio values in sound seeds and sterile seeds (shibudane and immature seeds); the figure shows the frequency of the relative reflectance ratio evidently varies at about 0.64.

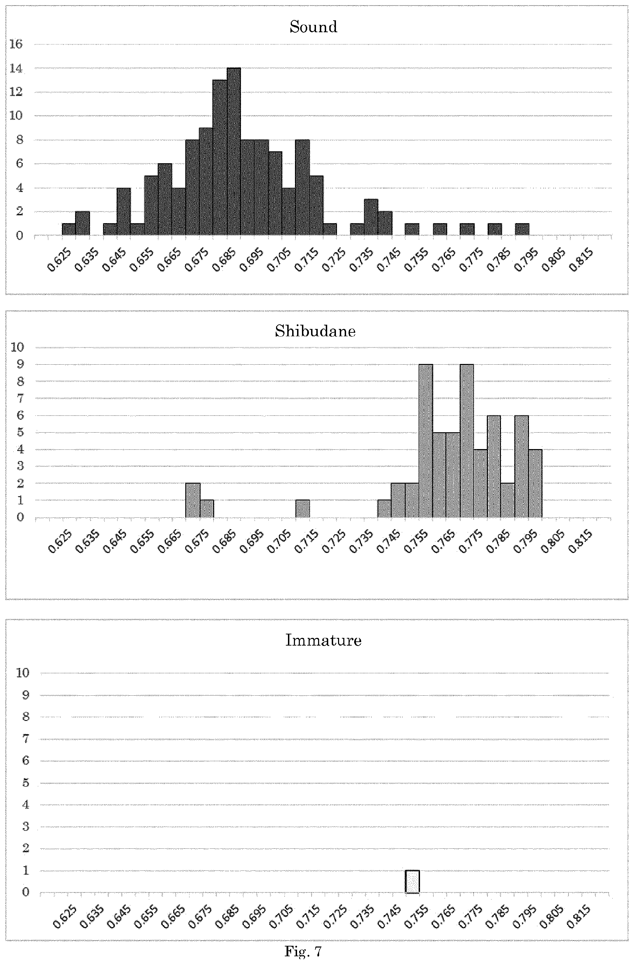

[Fig. 7] A figure showing, on the Japanese cedar (Ibaraki-originated), under selecting at wavelengths of 1400 nm and 1734 nm, the occurrence frequency pattern of the relative reflectance ratio values in sound seeds and sterile seeds (shibudane and immature seeds); the figure shows the frequency of the relative reflectance ratio evidently varies at about 0.72.

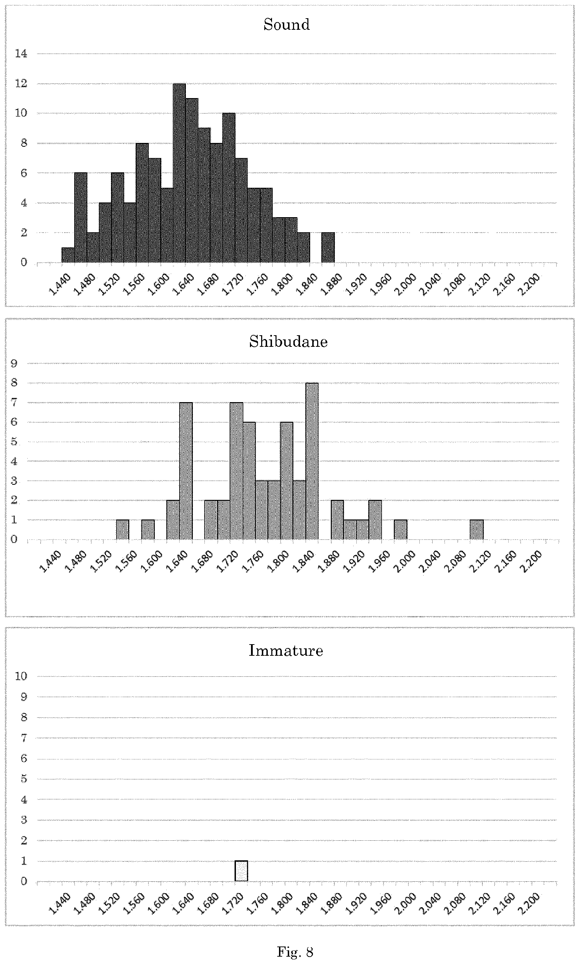

[Fig. 8] A figure showing, on the Japanese cedar (Ibaraki-originated), under selecting at wavelengths of 2100 nm and 1734 nm, the occurrence frequency pattern of the relative reflectance ratio values in sound seeds and sterile seeds (shibudane and immature seeds); the figure shows the frequency of the relative reflectance ratio evidently varies at about 1.66.

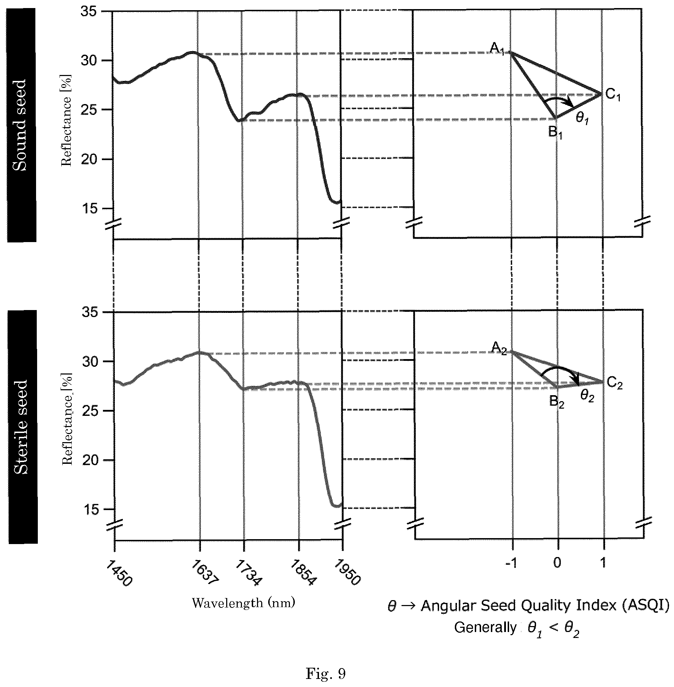

[Fig. 9] A figure showing a spectral pattern used in an analytical procedure in which reflectance data are supplemented. Angles θ₁ and angle θ₂ each indicate, regarding sound seeds and sterile seeds, angles formed by three data points on the reflectances.

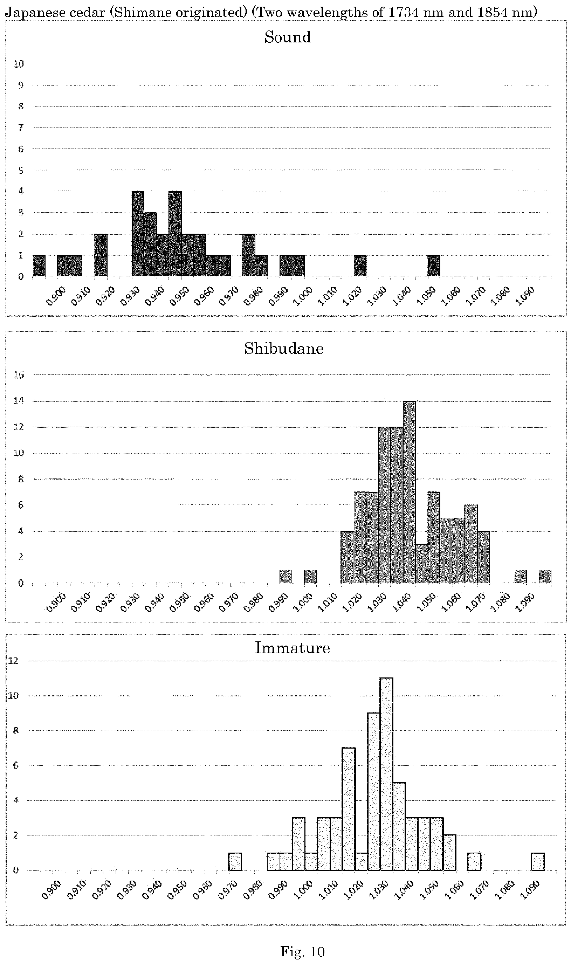

[Fig. 10] A histogram used for obtaining the result on the Japanese cedar (Shimane originated) as shown in the Example; the figure shows the frequency distribution areas of relative reflectance ratio (R1734/R1854) values in sound seeds and shibudane or immature seeds showed evident difference at a border of about 0.98.

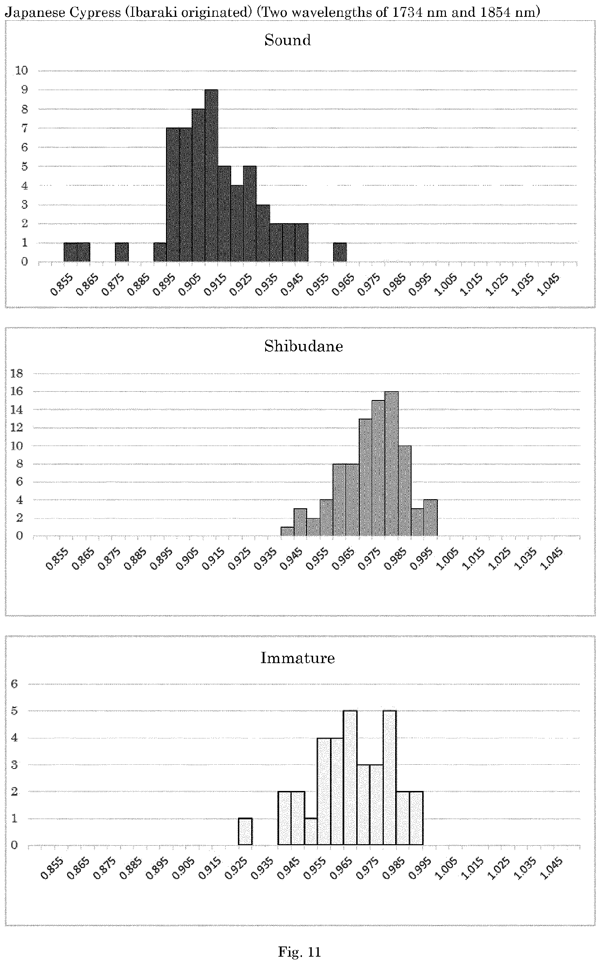

[Fig. 11] A histogram used for obtaining the result on the Japanese cypress (Ibaraki originated) as shown in the Example; the figure shows the frequency distribution areas of relative reflectance ratio (R1734/R1854) values in sound seeds and shibudane or immature seeds showed evident difference at a border of about 0.95.

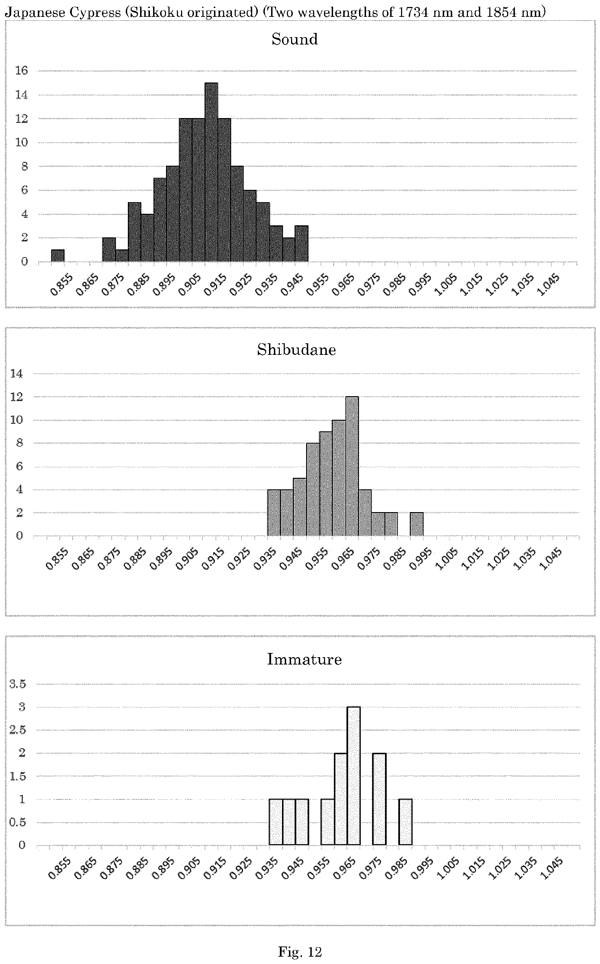

[Fig. 12] A histogram used for obtaining the result on the Japanese cypress (Shikoku originated) as shown in the Example; the figure shows the frequency distribution areas of relative reflectance ratio (R1734/R1854) values in sound seeds and shibudane or immature seeds showed evident difference at a border of about 0.95.

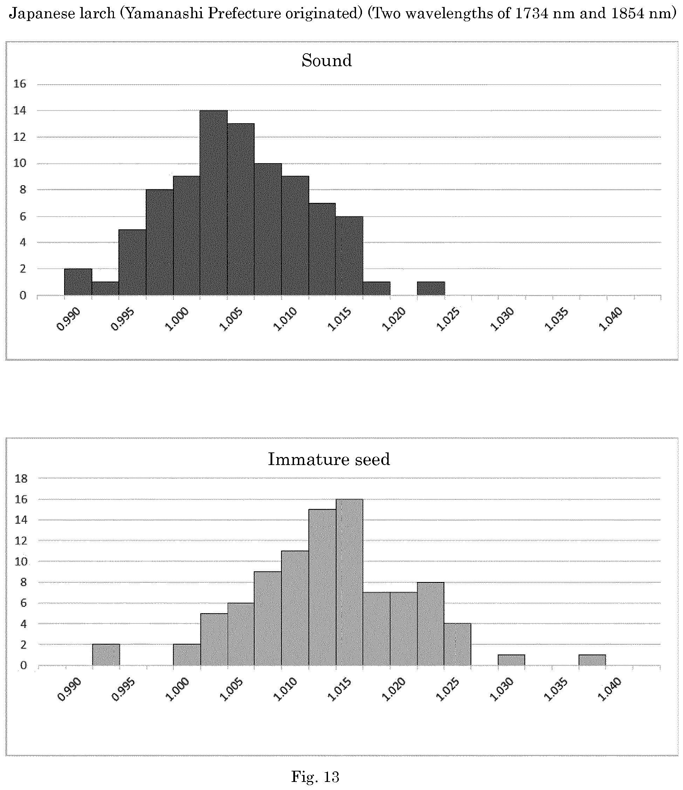

[Fig. 13] A histogram used in conducting selection on the larch (Yamanashi Prefecture originated) with the present inventive method using two wavelengths as shown in the Example; the figure shows the frequency distribution areas of relative reflectance ratio (R1734/R1854) values in sound seeds and immature seeds showed difference at a border of about 1.0075.

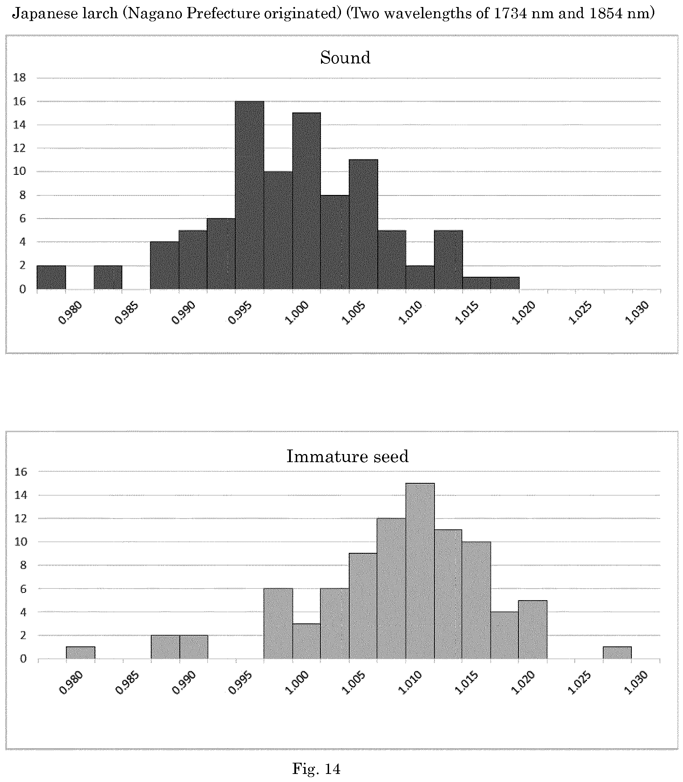

[Fig. 14] A histogram used in conducting selection on the larch (Nagano Prefecture originated) with the present inventive method using two wavelengths as shown in the Example; the figure shows the frequency distribution of values of a relative reflectance ratio (R1734/R1854) in sound seeds and immature seeds showed difference at a border of about 1.0075.

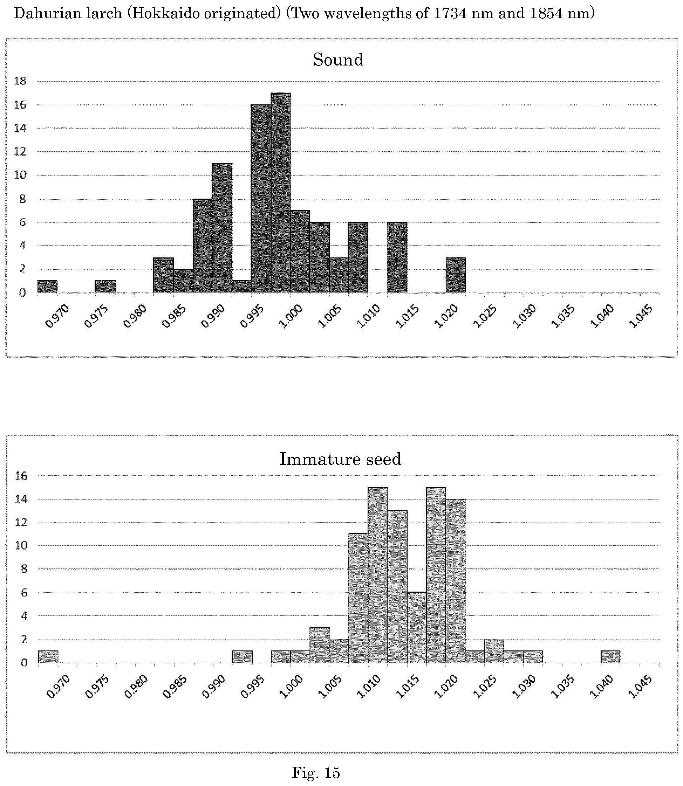

[Fig. 15] A histogram used in conducting selection on the Dahurian larch (Hokkaido originated) with the present inventive method using two wavelengths as shown in the Example; the figure shows the frequency distribution areas of relative reflectance ratio (R1734/R1854) values in sound seeds and immature seeds showed difference at a border of about 1.0025.

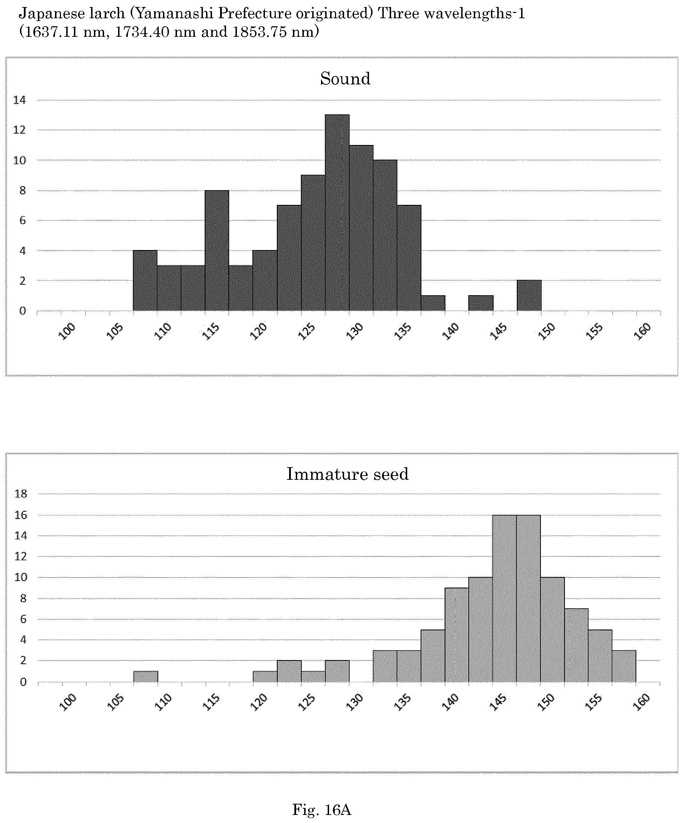

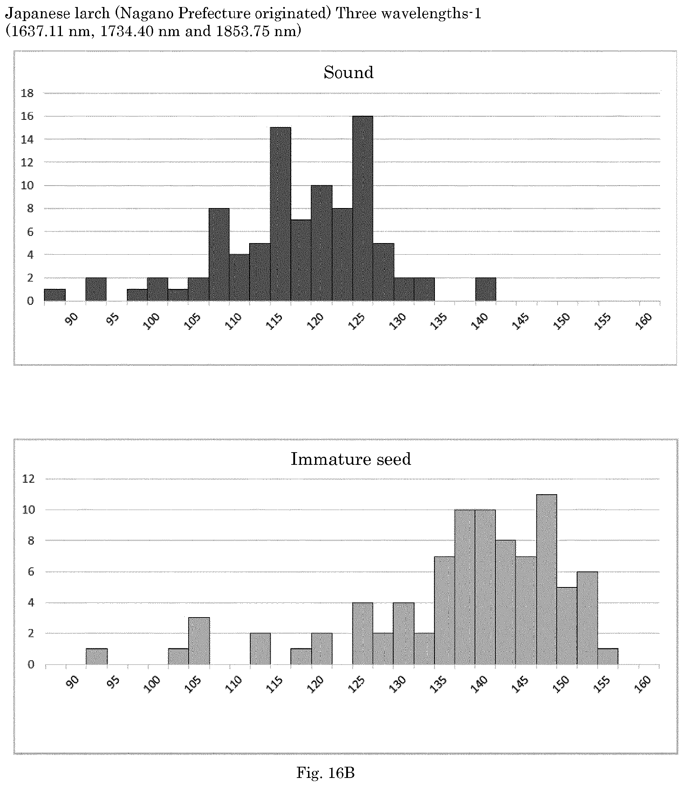

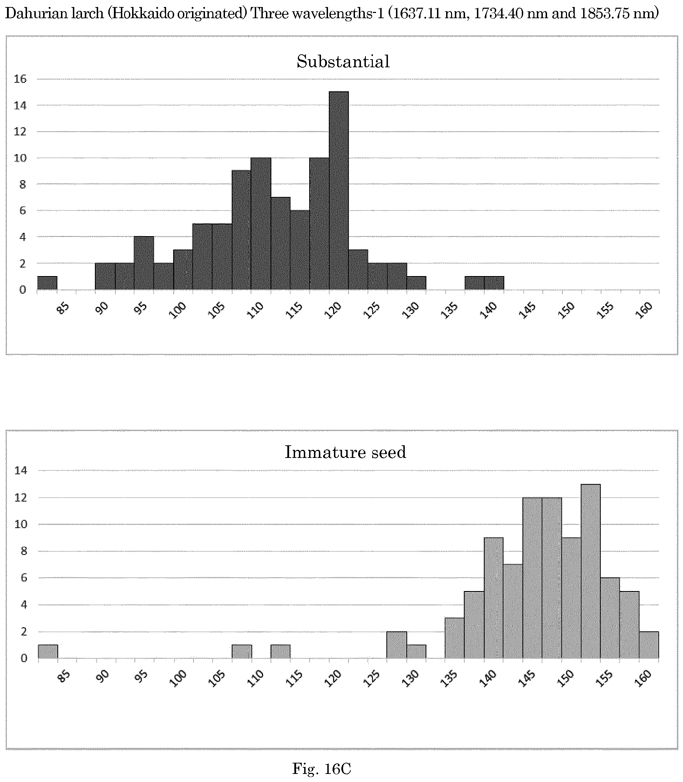

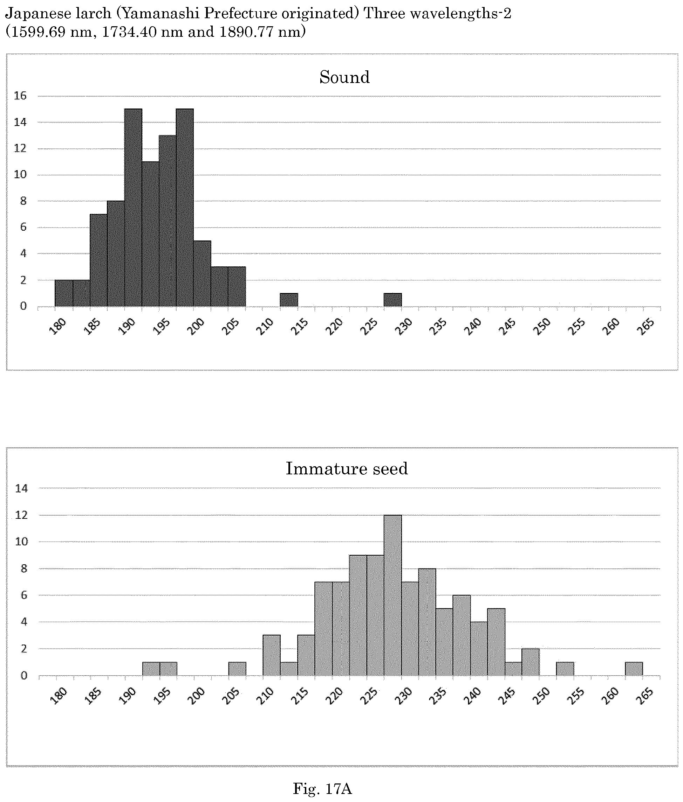

[Fig. 16A] A figure showing an example of analysis results on the larch (Yamanashi Prefecture originated)as shown in the Example, in which reflectance data were supplemented; the vertical axis denotes numbers and the horizontal axis denotes angle θ [unit: °] (also in Figures 16B and C as well as Fig. 17A to Fig. 17C).
   The wavelengths used were 1637.11 nm, 1734.40 nm and 1853.75 nm; the threshold was calculated as 135.62°. The vertical axis denotes numbers and the horizontal axis denotes angle θ (the angle formed by three data points of reflectances. Unit: °).
[Fig. 16B] A figure showing an example of analysis results on the larch (Nagano Prefecture originated) as shown in the Example, in which reflectance data were supplemented. The wavelengths used were 1637.11 nm, 1734.40 nm and 1853.75 nm; the threshold was calculated as 135.62°.
[Fig. 16C] A figure showing an example of analysis results on the Dahurian larch (Hokkaido originated) as shown in the Example, in which reflectance data were supplemented. The wavelengths used were 1637.11 nm, 1734.40 nm and 1853.75 nm; the threshold was calculated as 135.62°.
[Fig. 17A] A figure showing another example of analysis results on the larch (Yamanashi Prefecture originated) as shown in the Example, in which reflectance data were supplemented as shown in the Example. The wavelengths used were 1599.69 nm, 1734.40 nm and 1890.77 nm; the threshold was calculated as 202.86°.

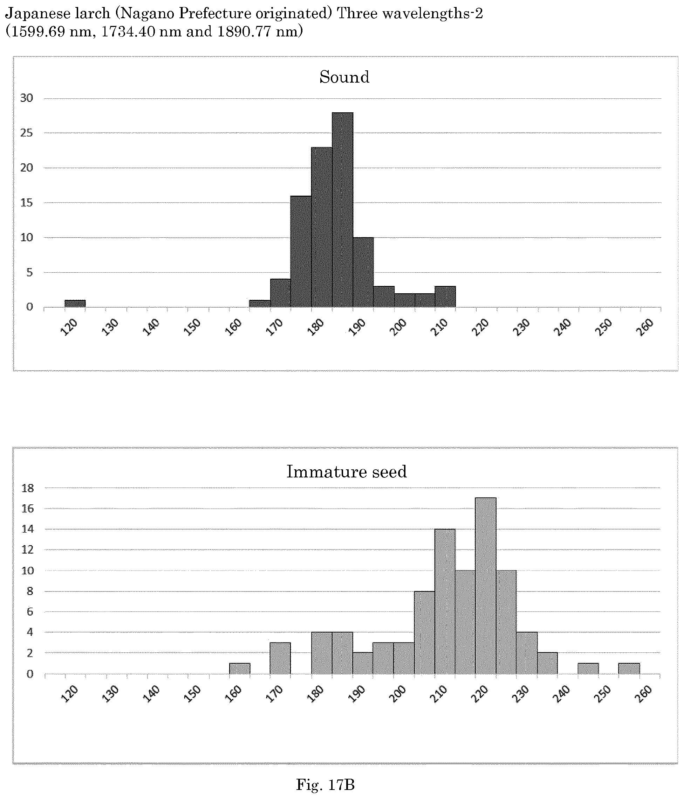

[Fig. 17B] A figure showing another example of analysis results on the larch (Nagano Prefecture originated) as shown in the Example, in which reflectance data were supplemented as shown in the Example. The wavelengths used were 1599.69 nm, 1734.40 nm and 1890.77 nm; the threshold was calculated as 202.86°.

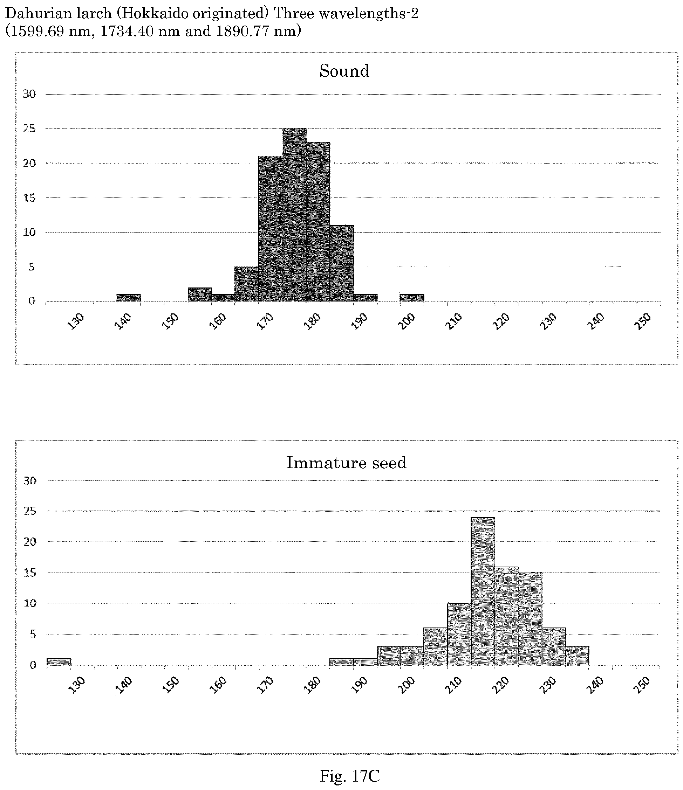

[Fig. 17C] A figure showing another example of analysis results on the Dahurian larch (Hokkaido originated) as shown in the Example, in which reflectance data were supplemented as shown in the Example. The wavelengths used were 1599.69 nm, 1734.40 nm and 1890.77 nm; the threshold was calculated as 202.86°.

### Description of Embodiments

The present invention is related, as mentioned above, a conifer seed selecting method, comprising the following steps, of for identifying and selecting just conifer seeds which have a normal embryo, from a mixture, of an identical species, of conifer seeds some having a normal embryo and some not having a normal embryo:
(a) irradiating the seeds with near infrared light, measuring the spectrum of near infrared light reflected from each seed, and obtaining data of reflectance at each wavelength;
(b) extracting, for each seed, data of reflectances at two specific wavelengths within a range of 750 to 2200 nm;
(c) calculating, for each seed, the ratio between the extracted reflectances; and
(d) comparing the ratio calculated in (c) with a threshold for the ratio of reflectances at the two specific wavelengths for determining whether the seed has a normal embryo, wherein (i) when there is a tendency that the ratio is lower than or equal to the threshold in a seed having a normal embryo, a seed having the ratio lower than or equal to the threshold is identified as a seed having a normal embryo, and (ii) when there is a tendency that the ratio is greater than the threshold in a seed having a normal embryo, a seed having the ratio greater than the threshold is identified as a seed having a normal embryo.

### (Definition/mechanism)

In the present description, the wording "germinable seed" denotes a seed, in which a normal embryo is formed, and has germination ability; the wording "sound seed" denotes seeds in general having a normal embryo. Germination could be suppressed by factors such as hibernation, so that having a normal embryo does not guarantee that the seed after being sown never fails to germinate. In other words, sound seeds comprise seeds having normal embryos having no germination ability (Fig. 1).

In contrast, the wording "sterile seed" means a seed not having a normal embryo and lacking germination ability. In addition, the wording "shibudane" denotes, out of the aforementioned seed not having a normal embryo (i.e. sterile seed), a seed which accumulated a dark-brown hard content (resin); "shibudane" is discriminated from a seed having no contents or a seed having an immaturely developed embryo (referred to as "immature seed" as combined) (Fig. 1).

In the present description, wavelength values are expressed with a value having down to the second decimal place, or with an integer derived from a measurement rounded off at the first decimal place; a value difference caused by these means of expression does not give any differences with respect to methods, and obtainable results are substantially identical.

Shibudane, a kind of sterile seeds which gives a principal cause of the decreased germination rate, are not different compared with sound seeds in terms of weight, specific weight or appearance but are different in the content ratio of components (stored lipid components) further inside from the testa. More specifically, shibudane have, in a site corresponding to a site where a white soft embryo is formed in sound seeds, accumulates a dark-brown hard content (Fig. 2). At least the aforementioned stored lipid components of Japanese cedar and Japanese cypress presumably abundantly contain triglycerides.

On the other hand, near-infrared spectral characteristics of living organism tissues are peculiar features related to chemical components of substances constituting the living organism. Our idea hence was, based on the spectral characteristics at the near-infrared wavelength region, by non-destructively detecting embryonic components of seeds, selection of sound seeds should be possible.

Meanwhile, with the present inventive method, not only discrimination of sound seeds and shibudane is possible, but discrimination of sound seeds and immature seeds is also possible. The present inventive method is hence also applicable to tree species (e.g. Pinaceae plants) generating relatively abundant immature seeds.

When molecules constituting a living organism tissue absorb the light energy in the infrared region, their vibration or rotation state changes. The amount of energy required for these state changes varies depending on the molecular structure, so that the infrared spectral characteristics of a living organism tissue are a peculiar feature depending on the chemical components constituting it. Among the infrared light, near-infrared light, having a relatively high energy level, compared with far-infrared and mid-infrared light of longer wavelengths, is absorbed by substances to a lesser extent, so that near-infrared light is suitable, without preparing ultrathin sections etc., for non-destructive measurement of constituting components o living organism tissues. Moreover, since it has high permeability to living organism tissues, it also has advantage for diagnosing an internal state which does not appear on a surface.

### (Procedures to conduct the present inventive method)

Procedures for an embodiment of the present inventive method are exemplified as below.

If necessary, as a standard value indicating that a seed to be a sound seed, a threshold of the aforementioned reflectance ratio is defined.

Said threshold can be defined, for example, from values falling within the range of about 0.5 to about 2.0, depending on a purpose of selection or precision. In Japanese cedar and Japanese cypress, for example, as clearly shown in the present description, said threshold can properly be about 0.6 to 1.7 depending on the wavelength of near-infrared light.

In addition, in a case where sterile seeds are permitted to be mixed after selection to prioritize lowering the risk of erroneously determining sound seeds as sterile seeds, the threshold as the standard should be set at the higher value. On the other hand, in a case where sound seeds are permitted to erroneously be determined as sterile seeds to prioritize higher certainty in removing sterile seeds, the threshold should be set at the lower value.

In cases where a threshold cannot be defined or a threshold is set more strictly, the threshold can be set with procedures as mentioned below.

On plural seeds (preference is given to the higher numbers; normally 30 or more, preferably 50 or more, more preferably 100 or more) of the conifer, light is uniformly irradiated with a continuous wavelength lamp such as a halogen lamp, and a hyperspectral image comprising spectroscopic information on the near-infrared region is filmed.

In the hyperspectral images, from all the pixels corresponding to each seed reflectance spectral information is then extracted; the mean value thereof is taken as a representative value for each seed.

The seeds of which reflectance spectrum was measured were subsequently dissected to determine with naked eyes whether the seed is a sound seed or sterile seed, and thereafter the reflectance spectra of the sound seeds and sterile seeds are compared to specify a site of a spectral waveform showing a characteristic change patter of the reflectance ratio specific either to sound seeds and/or sterile seeds.

A numerical parameter reflecting difference between sound seeds and sterile seeds in terms of the reflectance spectrum in the above mentioned wavelength region is set to express, with a value, the characteristic change pattern in terms of reflectance ratio and define a threshold (a range thereof) for the tree species as a suitable parameter to discriminate sound seeds and sterile seeds.

The spectral characteristics of living organism tissues can be measured, in addition to point measurement by an optical fiber type spectrometer, by using a hyper-spectral camera, which is a remote sensor, together with coordinate information (image) (plane measurement). In the measurement, selecting a device which shows high detection sensitivity in the target wavelength region is necessary. In order to measure the spectral characteristics in the region of 750 to 2200 nm (the absorption wavelength region of lipids falls within said region), which spectral characteristics the present invention focuses on, a device equipped with an infrared detector such as CCD, CMOS, HgCdTe (MCT), Type II superlattice (T2SL), etc. can be used.

As regards graphs formulated from said data for sound seeds and sterile seeds, graphs are remarkably different in the shapes at a certain wavelength portion. Namely, in normal seeds of Japanese cedar and Japanese cypress, for example, at a wavelength slightly larger than 1700 nm, a downwardly convex shape is given and, at a wavelength slightly larger than 1850 nm, a downwardly convex shape pattern is given (Fig. 3A), for example. In other words, the seeds have, around about 1720 to 1760 nm, the minimum value, and an M-shaped pattern around the wavelength range at about 1600 nm to about 1900 nm (Fig. 3A).

On the other hand, in sterile seeds (shibudane and immature seeds), such patterns are not shown and the graph in the wavelength region is a flat shape (Figures 3B and C).

The difference in reflection spectral patterns between sound seeds and sterile seeds is shown in Fig. 4 in a clearer manner.

This difference of graph shapes being expressed with numerical figures, a value (ratio) obtained by dividing the reflectance value around 1720 to 1760 nm with the reflectance value around 1840 to 1870 nm is, in sound seeds, below 1.0 in almost all seeds, whereas, in sterile seeds, almost all the values are 1.0 or more. The aforementioned ratio can thus be used as a numerical parameter reflecting a difference in a reflectance spectrum between sound seeds and sterile seeds. In addition, by specifying said value about 1 as a threshold, seeds of which said ratio is below the threshold can be identified as sterile seeds. In this case, as the two specific wavelengths, about 1734 nm and about 1854 nm each can preferably be selected.

In the above mentioned example, as the wavelength region where the reflectance spectra between sound seeds and sterile seeds are different, those around 1720 to 1760 nm and around 1840 to 1870 nm are selected, but wavelength regions or wavelengths are not limited to those which exemplified above and, as long as at least one of the two specific wavelengths is selected from the range of about 1720 nm to about 1760 nm, may be any wavelength region or wavelength. As another example of a combination of wavelength regions or wavelengths, recited is one wherein the two specific wavelengths are each selected from a range of about 1720 to about 1760 nm and about 1620 to about 1650 nm; in said example of the combination, the two specific wavelengths can each be about 1734 nm and about 1637 nm.

The above mentioned threshold may properly be set depending on a kind of the tree; sound seeds and sterile seeds are each analyzed with respect to the frequency distribution of the aforementioned ratio to identify two ranges of the ratio values which ranges have the highest appearing frequencies, and a value falling within the aforementioned two ranges, e.g. a value approximately in the middle, is defined as a threshold, thereby a value for the aforementioned ratio dividing the two distribution area almost equally being taken as a threshold. Seeds for which the aforementioned ratio is equal to or less than the threshold are identified as sound seeds. As stated in preceding descriptions, said threshold may vary, depending on a purpose, by being set as the higher or lower.

In step (a), all the seeds of the subject seed group are radiated with infrared light and a spectrum reflected from said seed is measured to collect reflectance data at each wavelength.

In step (b), i.e. a step of extracting, for each seed, data of reflectances at two specific wavelengths within a range of 750 to 2200 nm, the two specific wavelengths can be selected from a range, for example, where the minimum and maximum values are given with respect to an M-character shape part of a graph as mentioned above, and, with respect to a π-character shape part of a graph, a change rate of the slope becomes less steep. One of the wavelengths is preferably selected from the absorption wavelength region of lipids, about 1720 to about 1760 nm. The other wavelength may be one in the vicinity of the aforementioned the absorption wavelength region of lipids; said the other wavelength is preferably selected from a range of from 1250 to 1760 nm and 1840 to 2200 nm, and is more preferably selected from a range of from 1720 to 1760 nm and 1840 to 1870 nm. Selecting from these ranges is especially preferable for Japanese cedar and Japanese cypress; for Japanese cedar and Japanese cypress each, said wavelength of about 1734 nm and about 1854 nm makes the present inventive method especially preferable.

Step (c) is a step of calculating, for each seed, the ratio between the extracted reflectances.

In the subsequent step (d), comparing the ratio calculated in (c) with a threshold for the ratio of reflectances at the two specific wavelengths for determining whether the seed has a normal embryo, namely, the seed is a sound seed, (i) when there is a tendency that the ratio is lower than or equal to the threshold in a seed having a normal embryo, a seed having the ratio lower than or equal to the threshold is identified as a seed having a normal embryo, and (ii) when there is a tendency that the ratio is greater than the threshold in a seed having a normal embryo, a seed having the ratio greater than the threshold is identified as a seed having a normal embryo.

The above mentioned (i) and (ii) each are, by exchanging the denominator and numerator in calculating a ratio, interchangeable. As regards Japanese cedar and Japanese cypress, for example, the above mentioned threshold of about 1 is a ratio obtained by dividing a reflectance around 1720 to 1760 nm by a reflectance around 1840 to 1870 nm, in which case, a tendency is as follows: In sound seeds, for most of the seeds, it is below 1.0, and, in contrast, in sterile seeds, it mostly is 1.0 or larger; changing the denominator and numerator in the above mentioned division, the ratio values for sound seeds become 1.0 or larger and the ratio for sterile seeds becomes below 1.0.

Meanwhile, in Japanese cedar and Japanese cypress, said threshold is about 1, whereas the above mentioned threshold may be set depending on the tree species, which is also as mentioned above.

In addition, a specific wavelength region may be selected from a wavelength region where a spectrum pattern difference appears between sound seeds and shibudane. Even if, for example, 750 nm, 1250 nm, 1400 nm or 2100 nm is selected, with a difference in occurrence frequency of the aforementioned ratio, selection can be conducted (Figures 5 to 8). Selecting 750 nm is preferable for Japanese cypress.

The present inventive method not only can be used for any coniferous species but the origin of conifers is not limited. As examples of conifers, Cupressaceae plants and Pinaceae plants are recited. The present invention is preferably used for Cupressaceae plants; in particular, for Japanese cedar or Japanese cypress because efficiency of selecting sound seeds is especially high.

In addition, the present inventive method can preferably be used also for Pinaceae plants; as said Pinaceae plants, larches such as larch and Dahurian larch etc., firs such as Todo fir etc. and spruces such as Yeddo spruce, etc.

In the present inventive seed selecting method, wherein said method further comprises a step of analyzing data of a reflectance at a wavelength (may be referred to hereinafter as "wavelength C") different from the two specific wavelengths, an error is smaller and selection results are more robust against disturbance associated with measurement, so that said method is preferable.

In this method, other than one wavelength ((may be referred to hereinafter as "wavelength B") in from 1720 to 1760 nm, which is the absorption wavelength region of lipids, two wavelengths (may be referred to hereinafter as "wavelength A" and "wavelength C") are selected.

Subsequently, on the x-y coordinates, point A, point B and point C are plotted with the x coordinates -1,0, and 1 for each and with the y coordinates the reflectance at wavelength A, wavelength B and wavelength C for each.

These three points A, B and C forms a triangle having angle θ at B, which angle is then evaluated for selecting seeds.

Here, wavelength A, B and C are not necessarily in a relation such as wavelength A< wavelength B< wavelength C or wavelength A> wavelength B> wavelength C. In a case, for example, where wavelength A is 1637 nm, wavelength B is 1734 nm and wavelength C is 1854 nm, angle θ is, on sound seeds, smaller than sterile seeds (Fig. 9). By setting wavelength A and wavelength C as these wavelengths, an angle (angle θ₁ and angle θ₂ in Fig. 9) formed by data points for reflectance of the three points is arranged to be smaller on sound seeds than sterile seeds (angle θ₁ < angle θ₂). Said parameter hence is available for seed selection/determination and enables selection with higher accuracy.

With the present inventive method where the aforementioned two specific wavelengths and the wavelength different from the aforementioned two specific wavelengths are each wavelengths in a rage of from about 1580 nm to about 1650 nm, about 1700 nm to about 1790 nm and about 1800 nm to about 2100 nm, for example, selection accuracy is, compared with a method using two wavelengths, enhanced, so that said method is preferable.

In a case where the conifer is Cupressaceae plants or Pinaceae plants, the aforementioned two specific wavelengths and the wavelength different from the aforementioned two specific wavelengths being wavelengths of about 1600 nm to about 1650 nm, about 1700 nm to about 1790 nm and about 1950 nm to about 2100 nm gives preference on the present invention; the aforementioned two specific wavelengths and the wavelength different from the aforementioned two specific wavelengths being wavelengths of 1622 nm, 1772 nm and 1981 nm, or 1645 nm, 1727 nm and 1997 nm gives more preference on the present invention. Of these combinations of wavelengths, the combination of 1622 nm, 1772 nm and 1981 nm is in particular preferable for Japanese cedar, and the combination of 1645 nm, 1727 nm and 1997 nm is in particular preferable for Japanese cypress.

In addition, in larch plants, the aforementioned two specific wavelengths and the wavelength different from the aforementioned two specific wavelengths being wavelengths of about 1580 nm to about 1620 nm, about 1700 nm to about 1750 nm and about 1850 nm to about 1910 nm gives preference on the present invention; the aforementioned two specific wavelengths and the wavelength different from the aforementioned two specific wavelengths being wavelengths of 1600 nm, 1734 nm and 1891 nm gives more preference on the present invention.

Meanwhile, the present invention provides a method comprising the steps recited below for deciding on whether a seed of a specific conifer has a normal embryo, i.e. whether the seed is a sound seed. Said method can be used in a case where the aim is not selection of sound seed.
(a) irradiating the seeds with near infrared light, measuring the spectrum of near infrared light reflected from each seed, and obtaining data of reflectance at each wavelength;
(b) extracting, for each seed, data of reflectances at two specific wavelengths within a range of 750 to 2200 nm;
(c) calculating, for each seed, the ratio between the extracted reflectances; and
(d) comparing the ratio calculated in (c) with a threshold for the ratio of reflectances at the two specific wavelengths for determining whether the seed has a normal embryo, wherein (i) when there is a tendency that the ratio is lower than or equal to the threshold in a seed having a normal embryo, a seed having the ratio lower than or equal to the threshold is identified as a seed having a normal embryo, and (ii) when there is a tendency that the ratio is greater than the threshold in a seed having a normal embryo, a seed having the ratio greater than the threshold is identified as a seed having a normal embryo.

### Examples

The present invention is further explained referring to Examples. The present invention is not limited to the Examples in any meaning.

### (Example 1)

### Measurement and Analysis of Reflectances of Japanese cedar/ Japanese cypress seeds

### [Materials]

As materials, seeds of Japanese cedar and Japanese cypress stored at Forestry and Forest Products Research Institute, and Japanese cedar seeds stored at Mountainous Region Research Center were used.

For irradiating near-infrared light, a halogen lamp (in measuring reflectance for wavelengths from 400 nm to 980 nm, two commercial (manufacturer unknown) 250 W floodlights were used, and in measuring reflectance for wavelengths from 1250 nm to 2500 nm, two J110V100W/S (Iwasaki Electric Co., Ltd.) were used; for measuring the irradiation, a hyperspectral camera (for wavelengths from 400 nm to 980 nm, VNIR-200R, a product manufactured by Themis Vision Systems, Inc, and, for wavelengths from 1250 nm to 2500 nm, SWIR-200R, a product manufactured by Emerging Technologies Corporation) was used.

### [Methods]

As a standard value indicating to be a sound seed, a threshold of the aforementioned reflectance ratio was defined. Said process is not necessarily an essential process, for which knowledge in the prior art may be used if necessary.
(1) Seeds of Japanese cedar and Japanese cypress were uniformly irradiated with light from the halogen lamp to film hyperspectral images comprising spectroscopic information on the near-infrared region.
(2) In the hyperspectral images, from all the pixels corresponding to each see, reflectance spectral information was extracted. The mean value thereof was taken as a representative value for each seed.
(3) The seeds of which reflectance spectrum was measured were dissected to determine with naked eyes whether the seed is a sound seed or sterile seed.
(4) The reflectance spectra of the sound seeds and sterile seeds were compared to examine whether a site of a spectral waveform specific to each seed groups could be specified with reflectances alone.
(5) In addition, on the three points A, B and C (A<B<C) of which Y-coordinate is a reflectance (unit: %) on specific three wavelengths, ∠ ABC represents a degree of reflectance decrease at the middle wavelength, i.e. the wavelength at B, among the three wavelengths, which degree was taken as a parameter for predicting fertility of the seed. The parameter for which three wavelengths are considered (may be hereinafter referred to as ASQI (Angular Seed Quality Index)) is, compared with a parameter for which two wavelengths are considered (hereinafter as RSQI (Ratio-based Seed Quality Index)), is more robust against noise associated with measurement.

### [Results and Discussion]

For both Japanese cedar and Japanese cypress, based on reflectances at a narrow range between two wavelengths in the near-infrared region, sound seeds were detected and selected with high accuracy (Figures 10 to 12).

In addition, we confirmed that the germination rate is heightened with the selection (Tables 1 to 3). In confirming that the germination rate is heightened, ASQI, which is more robust against noise than RSQI, was used.

As regards Japanese cedar, in particular, the present inventive method heightened the ratio of germinable seeds from the ratio before the selection of 14.4% to 65.8%, which is 4.6 times higher.

Furthermore, as regards Japanese cypress, the ratios were 2.7 times (Ibaraki-originated, Table 2) and 1.8 times (Shikoku-originated, Table 3) higher.

In either Table, seeds categorized as "Other non-germinable seed" include, in addition to "immature seeds as erroneously selected as substantial" seeds, those "correctly selected as sound seeds which failed to germinate".

We considered that, for other tree species, a similar technique should enable selecting sound seeds.

**[Table 1]**

| Result on Shimane-Prefecture originated Japanese cedar | | |
|---|---|---|
| | Before Selection | After Selection |
| germinable seedGerminable seed | 26 (14.4%) | 25 (65.8%) |
| Shibudane | 113 (62.8%) | 1 (2.6%) |
| Other non-germinable seed | 41 (22.8%) | 12 (31.6%) |
| Total | 180 (100%) | 38(100%) |

**[Table 2]**

| Result on Ibaraki-Prefecture originated Japanese cypress | | |
|---|---|---|
| | Before Selection | After Selection |
| Germinable seed | 31 (17.2%) | 30 (46.9%) |
| Shibudane | 92 (51.1%) | 0 (0.0%) |
| Other non-germinable seed | 57 (31.7%) | 34 (53.1%) |
| Total | 180 (100%) | 64 (100%) |

**[Table 3]**

| Result on Shikoku originated Japanese cypress | | |
|---|---|---|
| | Before Selection | After Selection |
| Germinable seed | 38 (21.1%) | 35 (37.6%) |
| Shibudane | 84 (46.7%) | 7 (7.5%) |
| Other non-germinable seed | 58(32.2%) | 51 (54.8%) |
| Total | 180 (100%) | 93 (100%) |

Meanwhile, ranges of values which a relative reflectance based on reflectance at 1854 nm, i.e. R1734/R1854, may take are clearly different between sound seeds and sterile seeds, which difference had in advance been confirmed. Namely, as regards Japanese cedar, the frequencies of values for the relative reflectance (R1734/R1854) in sound seeds and shibudane were evidently different at a border of about 0.98 (Fig. 10); in Japanese cypress, said frequencies were evidently different at a border of about 0.95 (Figures 11 and 12). In Japanese cypress, immature seeds showed a similar tendency to that observed in shibudane.

For Japanese cedar and Japanese cypress, as a parameter for discriminating sound seeds and sterile seeds, hence R1734/R1854 was available, and the thresholds for each tree species were set to be about 1 and about 0.95.

In addition, by calculating ASQI values at all the coordinates on the hyperspectral image, spatial distribution was visualized. Confirmation was thereby made that sound seeds and sterile seeds can be discriminated at an image level.

By considering a ratio (area ratio) of pixels showing equal to or less than the ASQI value to all the pixels corresponding to a seed, and analyzing the relation between the threshold and area ratio in sound seeds of Japanese cedar and Japanese cypress, we confirmed that, irrespective of the origin of seeds, ranges of optimum values of the threshold and area ratio are almost identical. Namely, in addition to representative values of RSQI or ASQI, spatial distribution can be employed in discriminating sound seeds and sterile seeds.

### (Example 2)

### Measurement and Analysis of Reflectance on Seeds of Larches

### [Materials]

As materials, seeds of Yamanashi-originated larch and Hokkaido-originated Dahurian larch stored at Forestry and Forest Products Research Institute, and larch seeds stored at Nagano Prefectural Forestry Research Center.

The apparatuses used were the same as the apparatuses used in Example 1.

### [Methods]

As a standard value indicating to be a sound seed, a threshold of the aforementioned reflectance ratio was defined with a similar technique employed in Example 1 using two wavelengths or three wavelengths.

In the technique using two wavelengths, wavelengths of 1734.40 nm and 1853.75 nm were used; with respect to the relative reflectance ratio (R1734/R1854) values in sound seeds and immature seeds, a value of the relative reflectance ratio at which the distribution areas of sound seeds and immature seeds changes was determined.

In the technique using three wavelengths, a low wavelength of 1637.11 nm or 1599.69 nm was used in combination with wavelengths of 1734.40 nm and 1853.75 nm or wavelengths of 1734.40 nm and 1890.77 nm to identify angle θ at which the distribution areas of sound seeds and immature seeds change, and improvement in accuracy of selecting sound seeds was evaluated.

### [Results and Discussion]

### (1) Use of two wavelengths

In the larch originated in Yamanashi Prefecture and that originated in Nagano Prefecture, the frequency distribution areas of relative reflectance ratio (R1734/R1854) values in sound seeds and immature seeds showed difference at about 1.0075 (Figures 13 and 14). In the Hokkaido-originated Dahurian larch, the corresponding value was about 1.0025 (Fig. 15). Namely, in the larches from whatever origin (the larches originated in Yamanashi Prefecture and Nagano Prefecture as well as the Dahurian larch originated in Hokkaido), by analyzing reflectances as regards the two wavelengths of 1734.40 nm and 1853.75 nm, accuracy of discriminating sound seeds against immature seeds can evidently be improved.

### (2) Use of three wavelengths

In the case where three wavelengths of 1637.11 nm, 1734.40 nm and 1853.75 nm were used, the larches in any of the origins, the accuracy of discriminating sound seeds against immature seeds was further improved compared with the cases where two wavelengths were used. Namely, in the larches originated in Yamanashi Prefecture and Nagano Prefecture as well as the Dahurian larch originated in Hokkaido, with the determined threshold of 135.62°, the ratios after the selection of germinable seeds were 96.6%, 76.5% and 92.0%, respectively; in any of the cases, the ratio of germinable seeds was remarkably improved over the pre-selection (Tables 4 to Table 6; Fig. 16A to Fig. 16C).

**[Table 4]**

| Result on Yamanshi-Prefecture originated Japanese larch-1 | | |
|---|---|---|
| | Before Selection | After Selection |
| Germinable seed | 70 (53.0%) | 57 (96.6%) |
| Immature | 60 (45.5%) | 2 (3.4%) |
| Other non-germinating | 2 (1.5%) | 0 (0.0%) |
| Total | 132 (100.0%) | 59 (100.0%) |

**[Table 5]**

| Result on Nagano-Prefecture originated Japanese larch-1 | | |
|---|---|---|
| | Before Selection | After Selection |
| Germinable seed | 91 (50.6%) | 91 (76.5%) |
| Immature | 62 (34.4%) | 8 (6.7%) |
| Substantial/rotten | 27 (15.0%) | 20 (16.8%) |
| Total | 180 (100.0%) | 119 (100.0%) |

**[Table 6]**

| Result on Hokkaido originated Dahurian larch-1 | | |
|---|---|---|
| | Before Selection | After Selection |
| Germinable seed | 104 (57.8%) | 104 (92.0%) |
| Immature | 64 (35.6%) | 2 (1.8%) |
| Substantial/rotten | 12 (6.7%) | 7 (6.2%) |
| Total | 180 (100.0%) | 113 (100.0%) |

In addition, in the case where three wavelengths of 1599.69 nm, 1734.40 nm and 1890.77 nm were used, with the determined threshold of 202.86°, in the larches originated in Yamanashi Prefecture and Nagano Prefecture, the ratios after the selection of germinable seeds were 97.1%, 80.9%, respectively; accuracy of discriminating sound seeds against immature seeds was further improved (Table 7 to Table 8; Fig. 17A and Fig. 17B).

**[Table 7]**

| Result on Yamanshi-Prefecture originated Japanese larch-2 | | |
|---|---|---|
| | Before Selection | After Selection |
| Germinable seed | 70 (53.0%) | 66 (97.1%) |
| Immature | 60 (45.5%) | 1 (1.5%) |
| Other non-germinating | 2 (1.5%) | 1 (1.5%) |
| Total | 132 (100.0%) | 68 (100.0%) |

**[Table 8]**

| Result on Nagano-Prefecture originated Japanese larch-2 | | |
|---|---|---|
| | Before Selection | After Selection |
| Germinable seed | 91 (50.6%) | 89 (80.9%) |
| Immature | 62 (34.4%) | 2 (1.8%) |
| Substantial/rotten | 27 (15.0%) | 19 (17.3%) |
| Total | 180 (100.0%) | 110 (100.0%) |

As regards the Dahurian larch originated in Hokkaido, the ratio of germinable seeds after the selection with the determined threshold of 202.86° was 91.2%, which was similar degree of good accuracy to the case where three wavelengths of 1637.11 nm, 1734.40 nm and 1853.75 nm were used (Table 9; Fig. 17C).

**[Table 9]**

| Result on Hokkaido originated Dahurian larch-2 | | |
|---|---|---|
| | Before Selection | After Selection |
| Germinable seed | 104 (57.8%) | 104 (91.2%) |
| Immature | 64 (35.6%) | 2 (1.8%) |
| Substantial/rotten | 12 (6.7%) | 8 (7.0%) |
| Total | 180 (100.0%) | 114 (100.0%) |

These results clearly show that the present inventive method is applicable also to tree species generating relatively abundant immature seeds such as Pinaceae plants.

From the above mentioned results, what is clearly shown is, as regards coniferous trees in general, with the present inventive method, sound seeds and sterile seeds can be discriminated with high accuracy.

### [Industrial Applicability]

With the present invention, in coniferous trees, sound seeds and sterile seeds can be discriminated with high accuracy; the present invention greatly contributes development of afforestation and industries related thereto.

## Claims

1. A conifer seed selecting method, comprising the following steps, of for identifying and selecting just conifer seeds which have a normal embryo, from a mixture, of an identical species, of conifer seeds some having a normal embryo and some not having a normal embryo:
(a) irradiating the seeds with near infrared light, measuring the spectrum of near infrared light reflected from each seed, and obtaining data of reflectance at each wavelength;
(b) extracting, for each seed, data of reflectances at two specific wavelengths within a range of 750 to 2200 nm;
(c) calculating, for each seed, the ratio between the extracted reflectances; and
(d) comparing the ratio calculated in (c) with a threshold for the ratio of reflectances at the two specific wavelengths for determining whether the seed has a normal embryo, wherein (i) when there is a tendency that the ratio is lower than or equal to the threshold in a seed having a normal embryo, a seed having the ratio lower than or equal to the threshold is identified as a seed having a normal embryo, and (ii) when there is a tendency that the ratio is greater than the threshold in a seed having a normal embryo, a seed having the ratio greater than the threshold is identified as a seed having a normal embryo.

2. The method according to claim 1, wherein the conifer is a Cupressaceae plant or Pinaceae plant.

3. The method according to claim 2, wherein the conifer is a Cupressaceae plant and the Cupressaceae plant is the Japanese cedar or Japanese cypress.

4. The method according to claim 2, wherein the conifer is a Pinaceae plant and the Pinaceae plant is the pines, larches, firs or spruces.

5. The method according to any one of claims 1 to 4, wherein at least one of the two specific wavelengths are selected from a range between about 1720 nm and about 1760 nm.

6. The method according to any one of claims 1 to 4[1] to [4] above, wherein the two specific wave lengths are selected from a range between about 1620 nm and about 1760 nm.

7. The method according to any one of claims 1 to 4[1] to [4] above, wherein the two specific wave lengths are selected from a range between about 1720 nm and about 1870 nm.

8. The method according to claim 1, wherein said method further comprises a step of analyzing data of a reflectance at a wavelength different from the two specific wavelengths.

9. The method according to claim 8, wherein the two specific wavelengths and the wavelength different from the two specific wavelengths are each wavelength in a range of about 1580 nm to about 1650 nm, about 1700 nm to about 1790 nm and about 1800 nm to about 2100 nm.

10. The method according to claim 9, wherein the conifer is a Cupressaceae plant or Pinaceae plant, and the two specific wavelengths and the wavelength different from the two specific wavelengths are each wavelength in a range of about 1600 nm to about 1650 nm, about 1700 nm to about 1790 nm and about 1950 nm to about 2100 nm.

11. The method according to claim 9, wherein the conifer is a larch plant, and the two specific wavelengths and the wavelength different from the two specific wavelengths are each wavelength in a range of about 1580 nm to about 1620 nm, about 1700 nm to about 1750 nm and about 1850 nm to about 1910 nm.

12. A method for deciding whether a specific conifer seed has a normal embryo comprising the following steps:
(a) irradiating the seeds with near infrared light, measuring the spectrum of near infrared light reflected from each seed, and obtaining data of reflectance at each wavelength;
(b) extracting, for each seed, data of reflectances at two specific wavelengths within a range of 750 to 2200 nm;
(c) calculating, for each seed, the ratio between the extracted reflectances; and
(d) comparing the ratio calculated in (c) with a threshold for the ratio of reflectances at the two specific wavelengths for determining whether the seed has a normal embryo, wherein (i) when there is a tendency that the ratio is lower than or equal to the threshold in a seed having a normal embryo, a seed having the ratio lower than or equal to the threshold is identified as a seed having a normal embryo, and (ii) when there is a tendency that the ratio is greater than the threshold in a seed having a normal embryo, a seed having the ratio greater than the threshold is identified as a seed having a normal embryo.
